(19) Europäisches Patentamt

European Patent Office

Office européen des brevets

(11) **EP 0 882 277 B1**

(12) **FASCICULE DE BREVET EUROPEEN**

(45) Date de publication et mention
de la délivrance du brevet:
**12.02.2003 Bulletin 2003/07**

(51) Int Cl.⁷: **G06T 9/00**

(21) Numéro de dépôt: **97947129.9**

(86) Numéro de dépôt international:
**PCT/FR97/02119**

(22) Date de dépôt: **24.11.1997**

(87) Numéro de publication internationale:
**WO 98/024062 (04.06.1998 Gazette 1998/22)**

(54) **PROCEDE DE CODAGE AVEC INFORMATION DE REGION**

VERFAHREN ZUM KODIEREN MIT BEREICHSINFORMATION

METHOD FOR CODING WITH REGIONAL INFORMATION

(84) Etats contractants désignés:
**DE FR GB IT**

(30) Priorité: **28.11.1996 FR 9614600**

(43) Date de publication de la demande:
**09.12.1998 Bulletin 1998/50**

(73) Titulaire: **THOMSON multimedia
92648 Boulogne Cédex (FR)**

(72) Inventeur: **GUILLOTEL, Philippe
F-92648 Boulogne Cedex (FR)**

(74) Mandataire: **Ruellan-Lemonnier, Brigitte
THOMSON multimedia,
46 quai A. Le Gallo
92648 Boulogne Cédex (FR)**

(56) Documents cités:
- **BARAZANDE-POUR M ET AL: "ADAPTIVE MHDCT CODING OF IMAGES" PROCEEDINGS OF THE INTERNATIONAL CONFERENCE ON IMAGE PROCESSING (IC, AUSTIN, NOV. 13 - 16, 1994, vol. 1 OF 3, 13 novembre 1994, INSTITUTE OF ELECTRICAL AND ELECTRONICS ENGINEERS, pages 90-94, XP000521938**
- **PICKERING M R ET AL: "A PERCEPTUALLY EFFICIENT VBR RATE CONTROL ALGORITHM" IEEE TRANSACTIONS ON IMAGE PROCESSING, vol. 3, no. 5, 1 septembre 1994, NEW-YORK U.S., pages 527-532, XP000476829**
- **LE GALL D J: "THE MPEG VIDEO COMPRESSION ALGORITHM" SIGNAL PROCESSING. IMAGE COMMUNICATION, vol. 4, no. 2, 1 avril 1992, AMSTERDAM, pages 129-140, XP000273159**

**Description**

L'invention concerne un procédé de codage de données numériques vidéo pour une compression de ces données et pour une transmission d'information de région relative aux images vidéo codées. Elle concerne également un dispositif pour la mise en oeuvre du procédé.

Les techniques de compression de données vidéo sont connues pour être décrites par exemple dans la norme MPEG2 et dans Le Gall 'The MPEG video compression algorithm' Signal Processing. Image Communication, vol. 4, no. 2, 1er Avril 1992, Amsterdam, pages 129-140. Mais ces techniques n'exploitent pas les données relatives à la segmentation de l'image, par exemple des informations de région. Les informations supplémentaires à transmettre nécessitent un coût de transmission plus important pour une qualité d'image donnée ou bien rendent le codage incompatible de la norme.

La présente invention a pour but de remédier aux inconvénients précités.

A cet effet, l'invention a pour objet un procédé de compression de données numériques d'une image vidéo réalisant un découpage de l'image en blocs d'image, une Transformation Cosinus Discrète de ces blocs pour fournir des coefficients et une quantification de chaque coefficient à partir d'un pas de quantification, caractérisé en ce qu'il réalise également une segmentation de l'image et une labellisation des régions obtenues et en ce qu'il associe à chaque bloc un pas de régulation bloc à partir duquel est défini le pas de quantification de chaque coefficient du bloc, dont la valeur est calculée en fonction de ces labels.

L'invention a également pour objet un dispositif de compression de données numériques d'une image vidéo pour la mise en oeuvre du procédé précédant comprenant un circuit de découpage de l'image en blocs d'image, un circuit de Transformation Cosinus Discrète réalisant une telle transformation du bloc d'image en blocs de coefficients, un circuit de quantification pour la quantification des coefficients appartenant à ce bloc transformé à partir d'un pas de régulation, un circuit de régulation calculant un pas de régulation d'une image en fonction d'un débit de consigne des données en sortie du dispositif, caractérisé en ce qu'il comporte un circuit de segmentation recevant les données numériques pour définir des régions et fournir au circuit de quantification, pour chaque bloc, un label relatif à la région à laquelle il appartient et en ce que le circuit de quantification modifie, avant de l'exploiter, le pas de régulation en fonction de ce label pour fournir un pas de régulation bloc pour chaque bloc d'image.

L'invention a aussi pour objet un dispositif de décompression de données vidéo recevant des données comprimées selon le procédé précédemment décrit, données vidéo relatives à des blocs d'image appartenant à différentes régions de l'image et à des pas de régulation affectés à chaque bloc, comprenant un circuit de déquantification des coefficients appartenant à un bloc d'image, un circuit de Transformation Cosinus discrète Inverse réalisant une telle transformation inverse du bloc d'image, caractérisé en ce qu'il comporte des moyens pour déterminer la région à laquelle appartient le bloc à partir du pas de régulation reçu pour ce bloc.

Ainsi l'information de région est "portée" par l'information relative au pas de régulation.

Grâce à l'invention, l'information de région peut être transmise pratiquement sans dégrader la qualité de l'image, pour un débit de transmission donné. Le procédé de codage reste compatible de la norme MPEG lorsque celle-ci est adoptée.

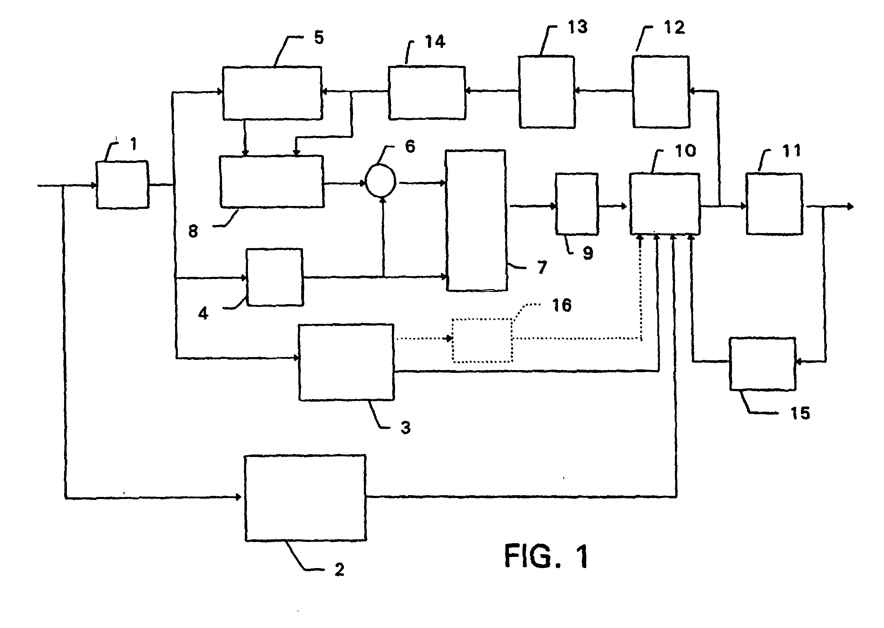

D'autres particularités et avantages de l'invention apparaîtront clairement dans la description suivante donnée à titre d'exemple non limitatif et faite en regard de la figure 1 annexée qui représente un dispositif selon l'invention.

Le dispositif décrit à la figure 1 est explicité ci-après.

Les données numériques de l'image vidéo sont transmises à l'entrée du dispositif. Cette entrée est reliée simultanément à l'entrée d'un circuit de mémoire image 1 qui réalise également un changement de l'ordre temporel des images et d'un circuit de segmentation en régions 2. La sortie du circuit de mémoire image est reliée à l'entrée d'un circuit de préanalyse 3, à l'entrée d'un circuit de découpage en blocs d'image 4, et à l'entrée d'un circuit d'estimation de mouvement S. La sortie du circuit de découpage est relié à une première entrée d'un soustracteur 6 et à une première entrée d'un circuit de sélection 7. La deuxième entrée du soustracteur provient d'un circuit de prédiction d'image 8.

La sortie du soustracteur 6 est reliée à une deuxième entrée du circuit de sélection- 7. La sortie de ce circuit est reliée à un circuit de calcul de Transformée Cosinus Discrète ou TCD 9. Les coefficients obtenus sont envoyés sur une première entrée d'un circuit de quantification 10 et la sortie de ce circuit de quantification est reliée à la sortie du dispositif par l'intermédiaire d'un circuit de codage en longueur variable ou CLV 11. La sortie du circuit de préanalyse 3 est reliée à une deuxième entrée du circuit de quantification 10. La sortie du circuit de segmentation 2 est reliée à une troisième entrée du circuit de quantification 10.

La sortie du circuit de quantification est également reliée à une deuxième entrée de l'estimateur de mouvement 5 par l'intermédiaire, successivement, d'un circuit de quantification inverse 12, d'un circuit de calcul de Transformée Cosinus Discrète Inverse 13 et d'une mémoire 14 branchés en série. La sortie de cette mémoire est également branchée sur une première entrée du circuit de prédiction 8. La sortie de l'estimateur de mouvement 5 est reliée à une deuxième entrée du circuit de prédiction 8.

Enfin, la sortie du circuit de codage CLV 11 est reliée à une quatrième entrée du circuit de quantification 10 par l'intermédiaire d'un circuit de régulation 15.

L'entrée du dispositif reçoit les données vidéo numériques, par exemple dans le format 4:2:0. Ces données sont mémorisées au niveau de groupes d'images dans la mémoire 1 qui classe également ces images dans un certain ordre. Chaque image est découpée en blocs d'image par le circuit de découpage 4 qui présente successivement chaque bloc de l'image courante à l'entrée du circuit de sélection 7.

Le circuit de prédiction d'image 8 a pour rôle de calculer une image prédite à partir d'une image précédente reconstruite provenant de la mémoire 14 et de vecteurs de mouvement transmis par l'estimateur de mouvement 5. Le bloc prédit correspondant au bloc courant est ensuite transmis sur une entrée du soustracteur et est soustrait du bloc courant présent sur l'autre entrée pour fournir en sortie du soustracteur une erreur ou résidu de bloc. Le circuit de sélection 7 choisit, parmi le bloc d'erreur ou bloc courant, celui ayant la plus faible énergie. Si le bloc courant est choisi, il s'agit d'un codage intra du bloc ; si le bloc d'erreur est choisi, il s'agit d'un codage inter. Il peut bien sûr exister plusieurs types de codage inter, non décrits ici, par exemple ceux définis dans la norme MPEG2. Le choix de codage porte alors également sur ces types de codage inter. Le bloc sélectionné subit une transformation cosinus discrète par l'intermédiaire du circuit de calcul de la Transformée Cosinus Discrète 9, avant d'être transmis au circuit de quantification 10. Les coefficients sont alors quantifiés avec un pas de quantification réel qui est un pas de quantification du bloc pondéré à partir d'une matrice de pondération, subissent ensuite un balayage de type zigzag puis sont envoyés au circuit CLV 11 qui réalise un codage en longueur variable, avant d'être disponibles en sortie du dispositif.

La quantification effectuée par le circuit de quantification 10 dépend du débit de consigne en sortie du dispositif. Une boucle de régulation comportant un circuit de régulation 15 permet de réguler le débit de sortie. Ce débit est prélevé en sortie du codeur CLV pour être transmis au circuit de régulation qui calcule en fonction du débit mesuré et du débit de consigne un pas de régulation, explicité plus loin, à partir duquel sont calculés les pas de quantification.

Le circuit de préanalyse 3 effectue une préanalyse de l'image, c'est à dire calcule le débit de l'image à coder pour un pas de quantification déterminé à partir des codages précédents. Il en déduit un pas de quantification de l'image qui sera éventuellement corrigé par la boucle de régulation.

Les coefficients quantifiés du bloc courant, disponibles en sortie du circuit de quantification 10 sont transmis à un circuit de quantification inverse qui reconstitue ces coefficients puis à un circuit de transformée cosinus discrète inverse qui reconstitue le bloc de l'image courante. Les blocs sont mémorisés dans la mémoire 14 qui fournit sur sa sortie l'image reconstituée ou reconstruite. L'estimateur de mouvement 5 compare le bloc courant reçu sur une entrée à l'image reconstituée reçue sur l'autre entrée pour en déduire un vecteur mouvement affecté à ce bloc courant et transmis au circuit de prédiction d'image 8. Celui-ci transmet un bloc prédit au soustracteur, bloc de l'image reconstruite décalé du vecteur mouvement par rapport au bloc courant traité.

Les données vidéo numériques en entrée du dispositif sont également transmises à un circuit de segmentation 2. Ce circuit a pour rôle de définir, dans l'image, des zones ou régions répondant à certains critères, par exemple des critères d'uniformité ou de mouvement. Une segmentation de base est par exemple l'identification d'un objet par rapport au fond de l'image, par exemple un présentateur par rapport à un fond uniforme.

Une matrice de coefficients affectant un numéro de région ou label à chaque bloc de l'image en fonction de la région à laquelle appartient ce bloc est ensuite transmise au circuit de quantification.

Le circuit de segmentation peut réaliser cette segmentation à partir d'une estimation de mouvement, le champ de vecteurs mouvement et les gradients de luminance permettant de définir les régions à partir des zones uniformes (mouvements homogènes) et de leurs frontières (gradients). Dans ce cas, les vecteurs mouvement calculés par ce circuit peuvent être transmis au' circuit de prédiction d'image, après une éventuelle mise en forme de ces vecteurs (par exemple une conversion de type pixels / blocs si l'estimation de mouvement est effectuée au niveau du pixel), rendant alors inutile l'estimateur de mouvement 5.

Le circuit de segmentation effectue également une mémorisation et un réordonnancement des images du type de ceux réalisés par le circuit de mémoire image 1 afin de fournir les informations sur sa sortie de manière synchrone.

Le dispositif de codage transmet en fait, selon la norme MPEG, non un pas de quantification mais un pas de régulation connu dans la norme sous l'appellation anglo-saxonne de Quant_Scale_Code.

Plus exactement, il transmet ce pas avec chaque macrobloc constitué de plusieurs blocs d'image, toutes les opérations précédemment décrites étant, dans la norme MPEG, réalisées sur des macroblocs, et non des blocs d'image. On raisonnera par la suite indifféremment sur des macroblocs ou blocs d'image.

Avec chaque macrobloc de coefficients intra ou de résidus sont transmises, entre autres et après codage en longueur variable par le circuit 11, la valeur d'un pas de régulation calculée par le circuit de quantification et la valeur du vecteur mouvement fournie par l'estimateur de mouvement si nécessaire (liaison entre l'estimateur de mouvement et le circuit de codage qui réalise également ce multiplexage non représentée sur la figure 1). En mode intra, ce vecteur mouvement n'est pas nécessaire.

Dans un exemple, le pas de quantification $q_r$ $(i,j)$, qui est le pas de quantification effectivement appliqué à un coefficient d'indice i,j correspondant aux ligne i et colonne j dans le bloc de coefficients, est relié au pas de régulation q du bloc par la formule :

$$q_r(i,j) = \frac{v(i,j) \times f(q)}{16}$$

v(i,j) est un coefficient de pondération de la matrice de pondération, pondération appliquée aux coefficients avant leur quantification.

f(q) est une loi linéaire ou non linéaire reliant le pas de régulation q au pas de quantification bloc f(q) appliqué au bloc.

D'une manière plus générale, le pas de régulation, que l'on appellera aussi pas de régulation bloc, est défini comme le paramètre transmis par le dispositif de compression pour chaque bloc ou macrobloc, dont la valeur est une fonction du pas de quantification réel appliqué aux coefficients du bloc ou macrobloc.

La matrice de labels transmise par le circuit de segmentation intervient directement sur le pas de régulation, calculé d'une manière classique à partir du circuit de régulation, pour le modifier. C'est le pas de quantification modifié correspondant qui est effectivement utilisé pour réaliser la quantification des coefficients, le pas de régulation modifié (pas de régulation bloc) étant quant à lui transmis, avec les données comprimées, vers le décodeur, "transportant" ainsi l'information de région.

Pour réaliser cette modification, à chaque région est attribuée une valeur d'incrémentation ou de décrémentation, une valeur différente pour chaque région, qui est ensuite appliquée à la valeur du pas de régulation calculée par le circuit de régulation. Les valeurs sont également réparties autour de la valeur du pas de régulation calculée par ce circuit de manière à conserver une valeur moyenne égale ou proche de celle-ci afin d'éviter de perturber cette régulation.

Si par exemple la valeur calculée du pas de régulation est 20 et si le nombre de régions à transmettre est de 5, on pourra choisir de quantifier les coefficients d'un macrobloc avec un pas de régulation bloc (qui est une valeur entière) compris entre 18 et 22 selon la région à laquelle il appartient.

L'influence de cette modification sur le pas de quantification est faible et sera moins grande sur les coefficients basse fréquence qui sont codés avec un pas de quantification plus faible que sur les coefficients haute fréquence.

Dans un fonctionnement de type VBR, de l'anglo-saxon Variable Bit Rate, et pour lequel le débit en sortie du dispositif peut varier au cours du temps, la modification du pas de quantification, et par conséquent du débit, n'est pas gênante.

Dans un fonctionnement du type CBR, de l'anglo-saxon Constant Bit Rate, et pour lequel on recherche un débit moyen constant, le processus de régulation généralement adapte le pas de quantification des dernières bandes de l'image ou "slices" selon le terme anglo-saxon consacré dans la norme MPEG, en fonction du débit mesuré pour les précédentes slices et du débit de consigne, de manière à se rapprocher de ce débit de consigne. L'information de région serait alors perdue et ce processus de régulation est donc inhibé à l'intérieur d'une image. La régulation est alors effectuée au niveau de l'image et non plus au niveau des slices. Simplement la vitesse d'asservissement au débit de consigne, ou temps de réponse, est plus lente et le débit instantané est moins constant.

Il est également possible de définir des modes de replis pour garantir tout dysfonctionnement. Par exemple un retour à une régulation classique par bande, s'il y a détection de risque d'assèchement ou débordement du buffer. Le fait que le pas de régulation bloc devienne fixe par bande alors qu'il variait au niveau de chaque bloc en fonction des régions indiquera au décodeur le changement de fonctionnement, ce changement étant transparent pour un décodeur classique exploitant la norme MPEG. L'information de région pourra alors être reconstituée, par exemple à partir de corrélation sur l'image, ou avec les images précédentes, ou plus simplement non disponible dans ces cas d'alarme.

Une amélioration du dispositif selon l'invention est décrite ci-après.

Reprenant le schéma de la figure 1 où la modification est représentée en traits pointillés, une deuxième sortie du circuit de préanalyse 3 est branchée à l'entrée d'un circuit de calcul de coefficients d'ajustement spatial 16. La sortie de ce circuit est reliée à une cinquième entrée du circuit de quantification 10.

Le but de ce circuit est de calculer, pour chaque macrobloc, un coefficient reflétant les caractéristiques spatiales de l'image, à savoir déterminer les macroblocs pour lesquels l'oeil est plus sensible aux erreurs que pour les autres.

Par exemple, pour les macroblocs appartenant à une zone de l'image très texturée, la valeur du coefficient est voisine de l'unité, cette valeur diminuant lorsque la zone à laquelle il appartient devient plus uniforme. Ces coefficients sont déduits du calcul de l'énergie ou du coût de codage du macrobloc, effectué lors de la préanalyse de l'image. Les macroblocs appartenant à des zones uniformes donnent une énergie plus faible que ceux appartenant à des zones texturées et donc des coefficients plus faibles leurs seront attribués.

Un autre critère retenu utilise l'information temporelle contenue dans les vecteurs déplacement ou mouvement. Pour une zone à mouvement plus lent que la majorité de la scène, le coefficient est plus faible que pour le reste de l'image. Ainsi ces zones sont-elles favorisées.

Ces critères peuvent également être définis de manière manuelle, l'utilisateur définissant des zones particulières de l'image qu'il souhaite favoriser. Il s'agit alors d'un contrôle de qualité subjectif effectué par l'opérateur.

Une matrice de coefficients spatiaux affectant un coefficient à chaque macrobloc et appelée masque de correction est ainsi calculée pour chaque image par ce circuit de calcul de coefficients spatiaux et est transmise au circuit de quantification 10.

Ce dernier réalise alors, à partir de la matrice de numéros de régions fournie par le circuit de segmentation 2, un moyennage des coefficients spatiaux par région de manière à obtenir un même coefficient par région.

Le circuit de quantification réalise dans cette variante, au lieu des opérations d'incrémentation et décrémentation, une opération de multiplication des pas de quantification, obtenus de manière classique, par ces coefficients moyennés puis un arrondi de la valeur calculée du pas de régulation pour déterminer un nouveau pas de régulation entier. Si le moyennage du coefficient spatial (on peut trouver des valeurs identiques) ou cet arrondi conduit à deux pas de régulation identiques pour des régions différentes, une valeur entière voisine la plus proche sera alors choisie pour éliminer cette identité.

Ainsi, la modification du pas de régulation (ou quantification) n'est plus réalisée de manière aléatoire en fonction des labels de régions mais en prenant en compte les caractéristiques spatiales et temporelles de l'image améliorant par là même, pour un même débit, la qualité de l'image.

Par exemple, pour une pondération spatiale, les zones uniformes, qui correspondent à un coefficient spatial plus faible, sont codées avec un pas de quantification plus petit et les zones texturées, qui correspondent à un coefficient plus élevé, sont codées avec un pas de quantification plus grand. Or, les effets de blocs sont d'autant plus importants que la variation du pas de quantification d'un bloc à l'autre (et donc le pas lui-même) est importante et l'oeil du spectateur est moins sensible aux effets de blocs dans les zones texturées que dans les zones homogènes.

Plutôt que de réaliser un moyennage sur chaque région des coefficients spatiaux $\alpha$, il peut tout aussi bien être choisi une valeur $\alpha$ par région, par exemple la valeur minimale ou maximale parmi celles des macroblocs appartenant à la même région. On vérifiera que deux régions différentes sont codées par des valeurs du pas de régulation différentes et si tel n'est pas le cas, on incrémentera ou décrémentera, par exemple, la valeur trouvée identique.

Au décodeur, les régions sont déterminées par les différentes valeurs des pas de régulation reçues pour une image.

Un suivi temporel des régions est de plus possible (mais non nécessaire) au niveau d'une séquence d'images, avec quelques contraintes supplémentaires.

Par exemple à partir du macrobloc courant affecté à une région n et du vecteur mouvement le faisant correspondre à un macrobloc de l'image précédente reconstruite, ce dernier affecté à une région m, on peut déduire que la région de label m de l'image précédente correspond à celle de label n de l'image courante.

La détermination de la région au décodeur peut se faire également en réalisant un moyennage, sur l'image, du pas de régulation transmis par le codeur. Le pas de régulation calculé par le circuit de régulation au niveau du codeur varie d'une image à l'autre, en particulier lors du changement du type de codage, par exemple d'intra en inter. En réalisant un moyennage du pas de régulation sur l'image, la valeur trouvée correspond au pas de régulation calculé par le circuit de régulation du codeur, le circuit de régulation travaillant sur ce pas moyen. L'écart entre le pas de régulation reçu et le pas de régulation moyen calculé au décodeur dans le cas où le codeur procède par incrémentation ou décrémentation de ce pas permet donc d'effectuer le suivi temporel, si l'on s'arrange au codeur pour conserver les mêmes labels de région d'une image à l'autre.

Dans le cas où intervient le coefficient spatial, la valeur de $\alpha$ est déterminée par une simple division par le pas moyen. La valeur de $\alpha$ qui donne l'information de région doit être alors maintenue constante dans le temps pour une région donnée.

L'information de région se limite à la précision du macrobloc. Il est cependant possible d'affiner cette résolution, par exemple en calculant précisément les frontières par la méthode de gradients, lorsque le décodeur, ou une application particulière au décodeur, nécessite une information plus précise.

Dans les exemples donnés, c'est le pas de régulation qui transporte l'information de région car c'est ce pas qui est transmis au décodeur dans la norme MPEG. Il est bien sûr tout aussi envisageable de faire porter cette information par le pas de quantification, toute valeur fonction prédéfinie du pas de quantification, ou toute autre information liée au codage d'un macrobloc et transmise au décodeur avec le macrobloc (vecteurs mouvement, etc.), lorsque ce sont de telles informations qui sont transmises, à la condition bien sûr que la modification apportée sur l'information transmise n'ait que peu d'incidence sur la qualité de l'image décodée.

**Revendications**

1. Procédé de compression de données numériques d'une image vidéo réalisant un découpage (4) de l'image en blocs d'image, une Transformation Cosinus Discrète (9) de ces blocs pour fournir des coefficients et une quantification (10) de chaque coefficient à partir d'un pas de quantification, **caractérisé en ce qu'**il réalise également

   - une segmentation (2) de l'image en régions pour définir des objets dans l'image
   - une labellisation (2) des régions, chaque label définissant une région,
   - une attribution, à chacun des blocs d'image, du label de la région à laquelle appartient le bloc,

et **en ce qu'**il associe à chaque bloc un pas de régulation bloc à partir duquel est défini le pas de quantification de chaque coefficient du bloc, dont la valeur est calculée en fonction du label attribué.

2. Procédé selon la revendication 1, **caractérisé en ce que** la fonction est une ou plusieurs incrémentations ou décrémentations d'une valeur d'un pas de régulation calculée pour l'image en fonction d'un débit de consigne, et **en ce que** deux pas de régulation bloc différents correspondent à deux régions différentes.

3. Procédé selon la revendication 2, **caractérisé en ce que** les incrémentations ou décrémentations sont uniformément réparties autour de la valeur du pas de régulation calculée en fonction d'un débit de consigne, de manière à conserver un débit moyen correspondant au débit de consigne.

4. Procédé selon l'une quelconque des revendications précédentes, **caractérisé en ce qu'**il effectue un calcul de coefficients de complexité (3) pour chaque bloc, et **en ce que** le calcul du pas de régulation bloc est réalisé en fonction de ce coefficient.

5. Procédé selon la revendication 4, **caractérisé en ce que** le coefficient de complexité est un coefficient de complexité spatiale reflétant l'uniformité spatiale du bloc calculé en fonction de son énergie.

6. Procédé selon la revendication 4, **caractérisé en ce que** le coefficient de complexité est un coefficient de complexité temporelle calculé en fonction de l'amplitude de déplacement du bloc d'une image à une autre.

7. Procédé selon la revendication 4, **caractérisé en ce que** le coefficient de complexité est calculé par sélection manuelle des zones à favoriser.

8. Dispositif de compression de données numériques d'une image vidéo pour la mise en oeuvre du procédé selon la revendication 1, comprenant

   - un circuit de découpage (4) de l'image en blocs d'image,
   - un circuit de Transformation Cosinus Discrète (9) réalisant une telle transformation du bloc d'image en blocs de coefficients,
   - un circuit de quantification (10) pour la quantification des coefficients appartenant à ce bloc transformé à partir d'un pas de régulation,
   - un circuit de régulation (15) calculant un pas de régulation d'une image en fonction d'un débit de consigne des données en sortie du dispositif, **caractérisé en ce qu'**il comporte :

   - un circuit de segmentation (2) définissant des objets dans l'image, labellisant ces objets et attribuant à chacun des blocs d'image, le label de l'objet auquel appartient le bloc, pour fournir ces labels au circuit de quantification,

   et **en ce que** le circuit de quantification (10) modifie, avant de l'exploiter, le pas de régulation en fonction de ce label pour fournir un pas de régulation bloc pour chaque bloc d'image.

9. Dispositif selon la revendication 8, **caractérisé en ce que** le circuit de quantification (10) incrémente ou décrémente la valeur du pas de régulation pour le calcul des pas de quantification, et **en ce que** deux pas de régulation bloc différents correspondent à deux régions différentes.

10. Dispositif selon la revendication 8 ou 9, **caractérisé en ce que** les données numériques sont transmises à un circuit de préanalyse (3) qui calcule et affecte des coefficients spatiaux à chaque bloc de l'image en fonction de l'uniformité spatiale de ces blocs, et **en ce que** la modification du pas de régulation est effectuée en fonction de ces coefficients spatiaux.

11. Dispositif selon la revendication 8 ou 9, **caractérisé en ce que** les données numériques sont transmises à un circuit de préanalyse (3) qui calcule et affecte des coefficients spatiaux à chaque bloc de l'image en fonction de l'amplitude du mouvement relatif de ce bloc par rapport à celui correspondant d'une image précédente, et **en ce que** la modification du pas de régulation est effectuée en fonction de ces coefficients spatiaux.

12. Dispositif selon la revendication 8 ou 9, **caractérisé en ce que** les données numériques sont transmises à un circuit de préanalyse (3) qui calcule et affecte des coefficients spatiaux à chaque bloc de l'image en fonction de données fournies par un utilisateur, et **en ce que** la modification du pas de régulation est effectuée en fonction de ces coefficients spatiaux.

13. Dispositif de décompression de données vidéo recevant des données comprimées selon le procédé de la revendication 1, données vidéo relatives à des blocs d'image appartenant à différentes régions de l'image et à des pas de régulation affectés à chaque bloc, comprenant un circuit de déquantification des coefficients appartenant à un bloc d'image, un circuit de Transformation Cosinus Discrète Inverse réalisant une telle transformation inverse du bloc d'image déquantifié, **caractérisé en ce qu'**il comporte des moyens pour déterminer la région à laquelle appartient le bloc à partir du pas de régulation reçu pour ce bloc.

**14.** Dispositif selon la revendication 13, **caractérisé en ce que** les moyens réalisent un moyennage du pas de régulation reçu pour chaque bloc sur l'image complète et un calcul relatif à ce pas moyen.

**15.** Dispositif selon la revendication 13, les données reçues étant également relatives à des vecteurs mouvement associés aux blocs, **caractérisé en ce qu'**un suivi de région d'une image à l'autre est effectué à partir des vecteurs mouvement.

**16.** Dispositif selon la revendication 13, **caractérisé en ce que** des labels définissant les régions sont maintenus identiques au cours du temps pour une même région et **en ce que** le label est défini par l'écart entre le pas de régulation du bloc transmis et le pas de régulation moyen pour l'image à laquelle appartient ce bloc.

**Patentansprüche**

**1.** Verfahren zur Komprimierung von digitalen Daten eines Videobildes, bei dem eine Zerlegung (4) des Bildes in Bildblöcke, eine diskrete Cosinustransformation (9) dieser Blöcke zur Bildung von Koeffizienten und eine Quantisierung (10) jedes Koeffizienten aus einem Quantisierschritt erfolgen, **dadurch gekennzeichnet, dass**

- eine Segmentierung (2) des Bildes in Bereiche zur Definition von Objekten in dem Bild,
- eine Etikettierung (2) der Bereiche, wobei jedes Etikett einen Bereich definiert,
- eine Zuordnung des Etiketts des Bereiches zu jedem der Bildblöcke, zu dem ein Block gehört,

erfolgen,
und dass jedem Block ein Block eines Regulierschritts zugeordnet wird, aus dem der Quantisierschritt jedes Koeffizienten des Blockes definiert wird, dessen Wert in Abhängigkeit von dem zugeordneten Etikett berechnet wird.

**2.** Verfahren nach Anspruch 1, **dadurch gekennzeichnet, dass** die Funktion in einer oder mehreren Inkrementierungen oder Dekrementierungen eines Wertes eines Regelschritts besteht, der für das Bild als Funktion des Einstellwertes einer Datenrate berechnet wird, und dass zwei verschiedene Blockregelschritte zwei verschiedenen Bereichen entsprechen.

**3.** Verfahren nach Anspruch 2, **dadurch gekennzeichnet, dass** die Inkrementierungen oder Dekrementierungen gleichmäßig um den Wert des Regelschritts verteilt werden, der in Abhängigkeit von einem Einstellwert der Datenrate berechnet wird, derart, dass eine dem Datenraten-Einstellwert entsprechende mittlere Datenrate konserviert wird.

**4.** Verfahren nach einem der vorangehenden Ansprüche, **dadurch gekennzeichnet, dass** es eine Berechnung von Komplexitäts-Koeffizienten (3) für jeden Block bewirkt und dass die Berechnung des Schritts der Blockregelung in Abhängigkeit von diesem Koeffizienten erfolgt.

**5.** Verfahren nach Anspruch 4, **dadurch gekennzeichnet, dass** der Komplexitäts-Koeffizient ein räumlicher Komplexitäts-Koeffizient ist, der eine räumliche Gleichmäßigkeit des in Abhängigkeit von seiner Energie berechneten Blocks wiedergibt.

**6.** Verfahren nach Anspruch 4, **dadurch gekennzeichnet, dass** der Komplexitäts-Koeffizient ein zeitlicher Komplexitäts-Koeffizient ist, der in Abhängigkeit von der Amplitude der Verschiebung des Blocks von einem Bild zu einem anderen berechnet wird.

**7.** Verfahren nach Anspruch 4, **dadurch gekennzeichnet, dass** der Komplexitäts-Koeffizient durch manuelle Auswahl der bevorzugten Bereiche berechnet wird.

**8.** Vorrichtung zur Komprimierung von digitalen Daten eines Videobildes für die Durchführung des Verfahrens nach Anspruch 1, enthaltend:

- eine Schaltung (4) zur Zerlegung des Bildes in Bildblöcke,
- eine Schaltung (9) zur diskreten Cosinustransformation, die eine derartige Transformation des Bildblocks in Blöcke von Koeffizienten bewirkt,
- eine Quantisierschaltung (10) zur Quantisierung der Koeffizienten, die zu dem aus einem Regelschritt transformierten Block gehören,
- eine Regelschaltung (15), die einen Regelschritt eines Bildes in Abhängigkeit von einem Datenraten-Einstellwert am Ausgang der Vorrichtung berechnet, **gekennzeichnet durch**:

eine Segmentierschaltung (2) zur Definition der Objekte in dem Bild , zur Etikettierung dieser Objekte und zur Zuordnung eines entsprechenden Etiketts zu jedem der Bildblöcke, um diese Etiketten zu der Quantisierschaltung zu liefern, und dass die Quantisierschaltung (10) vor der Auswertung den Regelschritt in Abhängigkeit von der Etikette ändert, um einen Schritt des Regelblocks für jeden Bildblock zu liefern.

9. Vorrichtung nach Anspruch 8, **dadurch gekennzeichnet, dass** die Quantisierschaltung (10) den Wert des Regelschritts für die Berechnung des Quantisierschritts inkrementiert oder dekrementiert, und dass zwei verschiedene Schritte des Regelblocks zwei verschiedenen Bereichen entsprechen.

10. Vorrichtung nach Anspruch 8 oder 9, **dadurch gekennzeichnet, dass** die digitalen Daten zu einer Voranalyse-Schaltung (3) übertragen werden, die die räumlichen Koeffizienten bei jedem Bildblock in Abhängigkeit von der räumlichen Gleichmäßigkeit dieser Blöcke berechnet, und dass die Modifikation des Regelschritts in Abhängigkeit von diesen räumlichen Koeffizienten erfolgt.

11. Vorrichtung nach Anspruch 8 oder 9, **dadurch gekennzeichnet, dass** die digitalen Daten zu einer Voranalyse-Schaltung (3) übertragen werden, die die räumlichen Koeffizienten bei jedem Bildblock in Abhängigkeit von der Amplitude der relativen Bewegung jedes Blocks zu demjenigen, der einen vorangehendem Bild entspricht, berechnen und beeinflussen, und dass die Modifikation des Regelschritts in Abhängigkeit von diesen räumlichen Koeffizienten erfolgt.

12. Vorrichtung nach Anspruch 8 oder 9, **dadurch gekennzeichnet, dass** die digitalen Daten zu einer Voranalyse-Schaltung (3) übertragen werden, die die räumlichen Koeffizienten bei jedem Bildblock in Abhängigkeit von den Daten, die durch einen Benutzer geliefert werden, berechnet und beeinflußt, und dass die Modifikation des Regelschritts in Abhängigkeit von diesen räumlichen Koeffizienten erfolgt.

13. Vorrichtung zur Dekomprimierung von Videodaten zum Empfang der komprimierten Daten nach dem Verfahren von Anspruch 1, wobei Videodaten für die Bildblöcke zu verschiedenen Bereichen des Bildes und zu dem bei jedem Block beeinflußten Regelschritt gehören, mit einer Schaltung zur Dequantisierung der Koeffizienten, die zu einem Bildblock gehören, eine Schaltung zur inversen diskreten Cosinustransformation, die eine derartige inverse Transformation des dequantisierten Bildblocks bewirkt, **gekennzeichnet durch** Mittel zur Bestimmung des Bereichs, zu dem der Block aus dem für diesen Block empfangenen Regelschritt gehört.

14. Vorrichtung nach Anspruch 13, **dadurch gekennzeichnet, dass** die Mittel eine Mittelwertbildung des empfangenen Regelschritts für jeden Block auf dem vollständigen Bild und eine Berechnung für einen mittleren Schritt bewirken.

15. Vorrichtung nach Anspruch 13, wobei die empfangenen Daten sich auch auf Bewegungsvektoren für diese Blöcke beziehen, **dadurch gekennzeichnet, dass** die Gebietsfolge des Bereichs von einem Bild zu einem anderen aus den Bewegungsvektoren erfolgt.

16. Vorrichtung nach Anspruch 13, **dadurch gekennzeichnet, dass** die die Bereiche definierenden Etiketten identisch während der Zeit für denselben Bereich aufrecht erhalten bleiben und dass das Etikett durch die Abweichung zwischen dem Regelschritt des übertragenen Blocks und dem mittleren Regelschritt für das Bild definiert wird, zu dem dieser Block gehört.

**Claims**

1. Process for the compression of digital data from a video image which carries out a partitioning (4) of the image into image blocks, a Discrete Cosine Transformation (9) of these blocks so as to deliver coefficients and a quantization (10) of each coefficient using a quantization interval, **characterized in that** it also carries out

   - a segmentation (2) of the image into regions in order to define objects within the image,
   - a labelling (2) of the regions, each label defining a region,
   - an allocation, to each image block, of the label of the region to which the block belongs,
   - and **in that** it associates with each block a block control interval on the basis of which the quantization interval for each coefficient of the block is defined, the value of which is calculated as a function of the allocated label.

2. Process according to Claim 1, **characterized in that** the function is one or more incrementations or decrementations of a control interval value calculated for the image as a function of a set-point bit rate, and **in that** two different block control intervals correspond to two different regions.

3. Process according to Claim 2, **characterized in that** the incrementations or decrementations are uniformly distributed about the control interval value calculated as a function of a set-point bit rate, in such a way as to maintain a mean bit rate corresponding to the set-point bit rate.

4. Process according to any one of the preceding claims, **characterized in that** it calculates complexity coefficients (3) for each block, and **in that** the calculation of the block control interval is carried out as a function of this coefficient.

**5.** Process according to Claim 4, **characterized in that** the complexity coefficient is a spatial complexity coefficient reflecting the spatial uniformity of the block calculated as a function of its energy.

**6.** Process according to Claim 4, **characterized in that** the complexity coefficient is a temporal complexity coefficient calculated as a function of the amplitude of displacement of the block from one image to another.

**7.** Process according to Claim 4, **characterized in that** the complexity coefficient is calculated by manually selecting the zones to be favoured.

**8.** Device for the compression of digital data from a video image for the implementation of the process according to Claim 1, comprising

- a circuit (4) for partitioning the image into image blocks,
- a Discrete Cosine Transformation circuit (9) which carries out such a transformation of the image block into blocks of coefficients,
- a quantization circuit (10) for quantizing the coefficients belonging to this transformed block on the basis of a control interval,
- a control circuit (15) which calculates an image control interval as a function of a set-point bit rate for the data output by the device, **characterized in that** it includes

- a segmentation circuit (2) defining objects within the image, labelling these objects and allocating to each of the image blocks, the label of the object to which the block belongs, to deliver these labels to the quantization circuit,

and **in that** the quantization circuit (10) modifies, before making use thereof, the control interval as a function of this label so as to deliver a block control interval for each image block.

**9.** Device according to Claim 8, **characterized in that** the quantization circuit (10) increments or decrements the value of the control interval for calculating the quantization intervals, and **in that** two different block control intervals correspond to two different regions.

**10.** Device according to Claim 8 or 9, **characterized in that** the digital data are transmitted to a preanalysis circuit (3) which calculates and assigns spatial coefficients to each block of the image as a function of the spatial uniformity of these blocks, and **in that** the control interval is modified as a function of these spatial coefficients.

**11.** Device according to Claim 8 or 9, **characterized in that** the digital data are transmitted to a preanalysis circuit (3) which calculates and assigns spatial coefficients to each block of the image as a function of the amplitude of the relative motion of this block with respect to the corresponding motion of a preceding image, and **in that** the control interval is modified as a function of these spatial coefficients.

**12.** Device according to Claim 8 or 9, **characterized in that** the digital data are transmitted to a preanalysis circuit (3) which calculates and assigns spatial coefficients to each block of the image as a function of the data supplied by a user, and **in that** the control interval is modified as a function of these spatial coefficients.

**13.** Device for the expansion of video data which receives data compressed according to the process of Claim 1, which video data relate to image blocks belonging to various regions of the image and to control intervals assigned to each block, comprising a circuit for dequantizing the coefficients belonging to an image block, an Inverse Discrete Cosine Transformation circuit which carries out such an inverse transformation of the dequantized image block, **characterized in that** it includes means for determining the region to which the block belongs on the basis of the control interval received in respect of this block.

**14.** Device according to Claim 13, **characterized in that** the means carry out an averaging of the control interval received in respect of each block over the complete image and a calculation relating to this mean interval.

**15.** Device according to Claim 13, the data received relating also to motion vectors associated with the blocks, **characterized in that** a region tracking from one image to another is performed on the basis of the motion vectors.

**16.** Device according to Claim 13, **characterized in that** labels defining the regions are kept identical over time for one and the same region and **in that** the label is defined by the discrepancy between the block control interval transmitted and the mean control interval for the image to which this block belongs.

EP 0 882 277 B1

FIG. 1

10